# EUROPEAN PATENT SPECIFICATION

(11) **EP 2 486 273 B1**
(45) Date of publication and mention of the grant of the patent: **01.01.2014**
(21) Application number: 11799881.5
(22) Date of filing: 30.11.2011
(51) Int. Cl.: F03D 9/00, F03D 11/02

(54) **RENEWABLE ENERGY EXTRACTION DEVICE SUCH AS A WIND TURBINE WITH HYDRAULIC TRANSMISSION**
GERÄT ZUR AUSNUTZUNG VON ERNEUERBARER ENERGIE, WIE EINE WINDTURBINE, MIT HYDRAULISCHEM GETRIEBE
DISPOSITIF POUR L'EXTRACTION D'ÉNERGIERENOUVELABLE COMME UNE ÉOLIENNE AVEC UNE TRANSMISSION HYDRAULIQUE

(30) Priority: 30.11.2010 GB 201020264; 18.02.2011 WO PCT/JP2011/000917
(43) Date of publication of application: 15.08.2012
(73) Proprietor: Mitsubishi Heavy Industries, Ltd., Tokyo 108-8215 (JP)
(72) Inventor: RAMPEN, William, Midlothian, Lothian, EH209TB (GB)
(74) Representative: Hindle, Alistair Andrew
(86) International application number: PCT/JP2011/006692
(87) International publication number: WO 2012/073502

(56) References cited:
- EP-A1- 1 555 441
- EP-A2- 2 154 368
- WO-A1-2009/058022
- WO-A2-2009/076757
- GB-A- 2 465 485
- US-A1- 2007 024 058

## Description

### Technical Field

The invention concerns renewable energy devices such as wind turbine generators (WTGs).

### Background Art

Renewable energy devices such as wind turbine generators and tidal stream generators are increasingly important sources of power for AC electricity networks. Such devices traditionally employ a transmission in the form of a gearbox to change the slow input speed of an energy extraction mechanism such as the rotor of a wind or tidal turbine into a fast output speed to drive a generator. Such gearboxes are challenging to design and build as they are prone to failure and expensive to maintain and replace or repair.

It has therefore been proposed to build transmissions for renewable energy devices using fluid working machines, it being possible to make such hydrostatic transmissions variable ratio even at large scales see e.g. EP 2 154 368. Such a hydrostatic transmission is also lighter and more robust than a gearbox, and lighter than a direct generator drive, which would otherwise perform the same function, and thereby reduces the overall cost of producing electricity. US 4503673 Schacle disclosed a plurality of variable displacement motors driven by a plurality of pumps, the motor displacement being varied in aggregate to control the hydraulic pressure according to a pressure vs. rotor speed function. WO 2007 053036A1 Chapple also disclosed a variable displacement motor driven by a fixed displacement pump, but with the motor displacement controlled according to the measured wind speed.

However, experience shows that the input power to renewable energy devices is unpredictable from second to second, due to gusts and turbulence. This creates undesirable variations in the power output to the electricity network. A further problem occurs when the electricity network is momentarily disconnected or requires extra energy from the device for a short time. For these reasons it has been proposed to use a fluid store connected between the pump and motor, and to control the pump and/or motor to achieve the second-by-second storage and retrieval of excess energy in the fluid store.

US 4496847 Parkins and Salter & Rae (1984) both disclosed a WTG comprising an electronically-commutated pump (i.e. one in which individual working chambers could be deactivated to vary the displacement of fluid by the pump each revolution, and thus the torque applied to the rotor). The rotor torque was controlled to maintain a desired ratio of rotor speed to measured wind speed, while the turbine (functionally equivalent to the motor) or motor respectively was controlled to maintain constant pressure in the fluid store (respectively a pressure vessel and a flywheel or a vacuum store). US 4280061 Lawson-Tancred disclosed another WTG whereby the pump displacement was controlled according to the square of rotor speed and the motor was controlled to maintain constant pressure, in which the fluid store was a weighted hydraulic ram. US 4274010 Lawson-Tancred disclosed in addition the ability to turn the generators/ motors on and off intermittently according to power availability.

Rampen, Taylor and Riddoch (2006) disclosed a WTG with an electronically-commutated pump and a hydraulic accumulator as the energy store, but did not describe how the pump, motor and accumulator could be controlled to achieve the second-by-second storage and retrieval of excess energy.

While accumulators are a cheap and reliable energy store, their fluid pressure must vary very widely in operation to provide the smoothing effect. Also, the efficiency of fluid working machines changes with operating pressure, and therefore it is desirable to optimise the operating pressure in use. Particularly if the operating pressure is low, the fluctuating energy input can, without warning, create a rotor torque beyond the pump's ability to provide a restraining torque at the current pressure, causing the rotor to speed up dangerously. Other emergency stop conditions might also require the sudden application of full torque to the rotor, such as faults with blades, ancillary equipment, the tower, or the fluid circuit. However, a WTG comprising accumulator energy storage cannot increase the torque quickly because the accumulator must be filled with fluid to raise the operating pressure.

For this reason US 4496847 disclosed controllable constricting valves for, when necessary, isolating the pump from the turbine, thereby raising pressure to control the device against rotor overspeed. However, even when open, these restricting valves introduce losses which reduce the generating efficiency of the WTG. In addition, energy generation stops when the restricting valves are operated.
It is, therefore, a first object of the present invention to provide a control method for a renewable energy device comprising a hydrostatic transmission and a cheap and reliable energy storage device, which is able to more quickly respond to detected faults, while maximising generating efficiency in normal operation and maintaining energy generation throughout the increase in torque demand.

### Summary of Invention

According to a first aspect, the invention provides a method of operating an energy extraction device to extract energy from a fluctuating energy flow from a renewable energy source, the device comprising: a hydraulic pump driven by and applying torque to a rotating shaft, the rotating shaft driven by the renewable energy source; a hydraulic motor driving a load; a high pressure manifold in fluid communication with an outlet of the hydraulic pump and an inlet of the hydraulic motor and being selectively placed in fluid communication with a fluid accumulator; at least one low pressure manifold in fluid communication with an outlet of the hydraulic motor and an inlet of the hydraulic pump; and a fault event sensor for detecting a fault event; wherein at least one of the hydraulic pump or hydraulic motor is an electronically controlled variable displacement hydraulic machine, comprising a plurality of working chambers of cyclically varying volume and a plurality of valves for regulating the net displacement of working fluid between each working chamber and each manifold, at least one valve associated with each working chamber being an electronically controlled valve, said electronically controlled valves being operated to select the volume of working fluid displaced by each said working chamber on each cycle of working chamber volume and thereby regulate the net rate of displacement of working fluid by the electronically controlled variable displacement hydraulic machine; the method characterised by interrupting fluid communication between the fluid accumulator and the high pressure manifold, and raising the fluid pressure within the high pressure manifold responsive to detection of a fault event.

In comparison to energy extraction devices of the prior art, a device according to the invention has a faster response time to certain faults, and is therefore less likely to be damaged. Also, it is not dependent on a variable constricting valve, which introduces huge energy losses by dissipating high pressure as heat which can cause the working fluid to boil, and which also are not practical at the large scale of many energy extraction devices (e.g. >3MW). Further, variable constricting valves placed directly in the fluid flow reduce the efficiency of the device, whereas in the present invention, only a small fraction of the energy flow every passes through a means for interrupting the fluid communication between the fluid accumulator and the high pressure manifold.

Electronically controlled variable displacement machines in which the volume of working fluid displaced by each working chamber is controlled on each cycle of working chamber volume by the active control of electronically controlled valves have much faster and more accurate control of displacement than conventional hydraulic machines, and thus an energy extracting device employing one or more of them has a greater chance of maintaining control (by which is meant, continuous shaft and load torque) when fluid communication between the fluid accumulator and the high pressure manifold is interrupted. Thus, hitherto, systems of the prior art have been directed away from the features of the invention.

Preferably the fluid pressure within the high pressure manifold is raised responsive to detection of a fault event. It may be that fluid pressure within the high pressure manifold is reduced responsive to a fault event. One or more pressure relief valves may open subsequent to the interruption of fluid communication between the fluid accumulator and the high pressure manifold, due to fluid pressure within the high pressure manifold being raised.

The invention is particularly useful as a response to fault events which can be mitigated by an increase or decrease in the torque to be applied by the hydraulic pump to the rotating shaft. Thus, preferably mitigating the fault event comprises increasing or decreasing the torque to be applied by the hydraulic pump to the rotating shaft.

Preferably fluid communication between the outlet of the hydraulic pump and the inlet of the hydraulic motor is maintained on detection of a fault event responsive to which fluid communication between the fluid accumulator and the high pressure manifold has been interrupted.

It may be that the net rate of displacement of working fluid by the hydraulic motor is decreased responsive to detection of a fault event. Thus, less fluid is absorbed by the hydraulic motor, raising the pressure in the high pressure manifold. It may be that the reduction in the net rate of displacement of working fluid by the hydraulic motor is temporary subsequent to detection of a fault event, and that the net rate of displacement of working fluid by the hydraulic motor may increase subsequent to raising the pressure in the high pressure manifold. Preferably the hydraulic motor is said electronically controlled variable displacement hydraulic machine.

Preferably the method comprises increasing the net rate of displacement of working fluid by the hydraulic pump responsive to detection of a fault event. Thus, more fluid is pumped by the hydraulic pump, raising the pressure in the high pressure manifold. It may be that the increase in the net rate of displacement of working fluid by the hydraulic pump is temporary subsequent to detection of a fault event, and that the net rate of displacement of working fluid by the hydraulic pump may decrease subsequent to raising the pressure in the high pressure manifold. Preferably the hydraulic pump is said electronically controlled variable displacement hydraulic machine.

Preferably the fluid accumulator is selectively placed in fluid communication with the high pressure manifold by an isolating valve. Preferably the energy extraction device comprises a controller, operable to control the isolating valve. Preferably the controller is operable to control the hydraulic pump and the hydraulic motor.

The fault event is preferably one or more of an overspeed condition, a wind gust, an extreme wind gust, a request to stop the rotating shaft, or an undesirable structural condition. An extreme wind gust may be 30%, 50%, or even 100% higher wind velocity than the current average wind velocity. For example, a request to stop the rotating shaft could be due to detection of rotor shaft bearing damage, hydraulic fluid leakage, pitch system failure, loss of generator field current or failure of a critical electronic control module.

Preferably the fault event is detected responsive to a calculation that an acceptable operation range of the energy extraction device has been or will soon be exceeded. By soon is meant, between the present time ('now') and a time horizon in the future, such that an action taken now would prevent the acceptable operation range being exceeded at any time between now and the time horizon, given all the probable operating conditions between now and the time horizon.

Preferably the acceptable operation range comprises one or more of an acceptable speed range (for example of the rotating shaft, or the load), an acceptable torque range (for example of the rotating shaft, or the load), or an acceptable pressure range (for example of the fluid accumulator pressure or the high pressure manifold), an acceptable voltage range (for example of the load, where the load is a generator), an acceptable temperature range (for example of the working fluid of the hydraulic pump and motor, or the load), or an acceptable frequency range (for example of the load, where the load is a generator) of the energy extraction device, or an acceptable movement range (for example, of a first part of the energy extraction device relative to a second part).

Preferably the fault event sensor comprises one or more of a shaft speed sensor, wind speed sensor, pressure sensor, motion/vibration sensor, voltage sensor, current sensor, frequency sensor or temperature sensor. The fault event sensor may comprise comparison means operable to compare a measured value of the sensor with an acceptable operation range of the energy extraction device.

Preferably the fluid accumulator is generally in fluid communication with the hydraulic pump and the hydraulic motor except in response to detection of a fault event. Thus, in normal use (i.e. use before a fault event is detected), preferably the fluid accumulator absorbs and releases energy to the hydraulic motor and pump in response to the fluctuating energy flow, or fluctuations in the load.

It may be that said fluid accumulator comprises a plurality of smaller fluid accumulator modules the method further comprising interrupting fluid communication between one or more, but not all, of said plurality of smaller fluid accumulator modules and the high pressure manifold responsive to detection of a fault event.

Preferably at least one accumulator regulator is provided for interrupting, or allowing, fluid communication between the or each fluid accumulator and the high pressure manifold. Preferably the or each accumulator regulator is a valve having an open state in which the or each fluid accumulator is placed in fluid communication with the high pressure manifold, and a closed state in which the or each fluid accumulator is not in fluid communication with the high pressure manifold. Preferably fluid communication between the or each fluid accumulator and the high pressure manifold is direct in the open state, that is to say, not passing through any other fluid flow regulating devices. It may be that the or each accumulator regulator has one or more partial states in which the or each fluid accumulator is placed in fluid communication with the high pressure manifold such that fluid can gradually flow therebetween. By gradually it is meant that equalising pressure between the or each fluid accumulator and the high pressure manifold may take up to several seconds or minutes.

Preferably the renewable energy device further comprises at least one additional fluid accumulator which is in permanent fluid communication with the high pressure manifold.

Preferably the method further comprises determining that fluid communication between the or each fluid accumulator and the high pressure manifold is interrupted, detecting a first pressure in the high pressure manifold and a second pressure in the or each fluid accumulator, selecting the volume of working fluid displaced by each working chamber of at least one of the hydraulic pump and the hydraulic motor to cause the first and second pressures to converge, and placing the or each fluid accumulator and the high pressure manifold in fluid communication with each other when the first pressure and the second pressure meet an equality criterion. The equality criterion may be that they are the same to within a predetermined tolerance, which may be expressed in absolute terms, or as a ratio, for example.

It may be that the energy extraction device comprises a bleed valve arranged to bring the high pressure manifold pressure and the or each fluid accumulator pressure towards the same value, and that the method further comprises closing the bleed valve when fluid communication between the high pressure manifold and the fluid accumulator is interrupted, and opening the bleed valve before fluid communication between the high pressure manifold and the fluid accumulator is reinstated.

It may be that the controller sends pitch actuation signals to control the pitch of the blades, before, after or at the same time as interrupting the fluid communication between the high pressure manifold and the accumulators.

The energy extraction device is an energy extraction device for extracting energy from a renewable energy source, such as a flow of air or water, via one or more turbines, propellers or other devices. For example, the energy extraction device may be a wind turbine generator (WTG) or a generator for extracting energy from flowing water (e.g. a tidal stream generator). The energy flow extracted typically fluctuates from one minute to the next, which without the benefit of the fluid accumulator would cause the energy flow to the load to fluctuate. Renewable energy devices that produce a smoothed energy output may be able to command a higher price for the energy they produce, or be more easily connected to energy grids, than those that provide a fluctuating output.

The load is typically an electric generator (especially, a synchronous generator) for generating power into an electricity grid but may be a pump, fan or compressor. Different loads may be connected at different times.

The fluid accumulator is typically a gas-charged accumulator filled at one end with pressurised nitrogen or other gases, or may be any other device suitable for storing pressurised hydraulic fluid. There may be multiple fluid accumulators and each may be filled with different gasses at different pressures. There may be multiple hydraulic pumps and/or multiple hydraulic motors. The fluid pressure in the high pressure manifold is typically variable between 50 to 350 Bar greater than the fluid pressure in the low pressure manifold. The fluid pressure in the low pressure manifold is typically slightly higher than atmospheric pressure, for example 2 to 5 Bar, but may be approximately atmospheric pressure. Low pressure pumps and pressure relief valves may connect the low pressure manifold to a reservoir of working fluid, and there may be a low pressure accumulator in fluid communication with the low pressure manifold.
By selecting the net rate of displacement of working fluid is meant selecting the net displacement of one or more working chambers over a time period, or selecting the number of working chambers making a net displacement of fluid over a time period and the net displacements of those said working chambers.

By selecting the net displacement of working fluid is meant actively controlling at least one electronically controlled valve associated with a working chamber to cause the displacement of a volume of fluid into or out of the high pressure manifold, synchronised with individual cycles of working chamber volume.

Preferably the net displacement of working fluid is selected cycle-by-cycle for each individual working chamber, such that all the working chambers operating together fulfil a net rate of displacement demand which can be achieved by the displacement of fluid. Preferably the net rate of displacement demand for the working chambers of the pump is calculated from the net torque applied to the rotating shaft. Preferably the net rate of displacement demand of the working chambers of the motor is calculated from the net torque or power applied to the load, or the rate of displacement of fluid from the high pressure manifold.

Preferably the torque applied to the rotating shaft by the hydraulic pump is regulated according to a function comprising one or more of the current rotation rate of the rotating shaft and the rate of change of the rotation rate of the rotating shaft. Preferably the torque applied to the rotating shaft by the hydraulic pump is regulated in at least one constant lambda range substantially according to a function of the square of the rotational speed of the rotating shaft. Preferably the torque applied to the rotating shaft by the hydraulic pump is adjusted by a function of the rate of change of the rotation rate of the rotating shaft.

By regulating the torque is meant selecting the net rate of displacement of working fluid by the hydraulic pump according to a torque demand function, which may be a function of one or more measured parameters of the renewable energy source or the energy extraction device. It may be that the torque demand function is a function of the speed of the rotating shaft or the speed of the fluctuating energy flow. The torque demand function may specify the time-averaged net torque applied to the rotating shaft by the plurality of working chambers of the pump. Preferably the net rate of displacement of working fluid by the hydraulic pump is selected responsive to the torque demand function, the one or more measured parameters, and the measured pressure. Preferably the net displacement of working fluid is selected on a cycle-by-cycle basis for each individual working chamber, such that the time-averaged net torque applied to the rotating shaft by the active working chambers of the pump fulfils the torque demand function. Preferably the torque applied to the rotating shaft by the working chambers is selected on a cycle-by-cycle basis by actively controlling at least one electronically controlled valve associated with a working chamber to cause the pressurisation of said working chamber and the transference by the working chamber of torque to the rotating shaft synchronised with individual cycles of working chamber volume.

Preferably the pressure in the high pressure manifold is regulated towards a target (typically optimum) pressure, or range of pressures. By regulating the pressure in the high pressure manifold we include selecting the net rate of displacement of working fluid by the hydraulic pump or by the hydraulic motor relative to the net rate of displacement of working fluid by the other of the hydraulic pump or hydraulic motor, to increase or decrease the amount of fluid stored in the accumulator and thereby increase or decrease respectively the pressure of the working fluid in the high pressure manifold towards a target pressure.

Preferably when the pressure exceeds a (fixed or variable) threshold, action is taken to reduce the torque transmitted to the hydraulic pump through the rotating shaft. Preferably when the pressure exceeds the threshold the renewable energy source is controlled to reduce the torque transmitted to the rotating shaft by the renewable energy source. Preferably when the pressure exceeds a (fixed or variable) threshold, the net rate of displacement of working fluid by the hydraulic pump is reduced. Preferably when the pressure exceeds a (fixed or variable) threshold, the method comprises reconfiguring the energy extraction device to extract less energy from the fluctuating energy source. Where the energy extraction device is a turbine, recon-figuring the energy extraction device may comprise one or more of changing the pitch of the blades, feathering the blades, applying a mechanical brake or applying a hydraulic brake.

Preferably the method comprises regulating the time-averaged net displacement of working fluid displaced by each working chamber. By net displacement of fluid is meant the net fluid that is displaced into or out of the high pressure manifold by the hydraulic pump or the hydraulic motor during one complete cycle of working chamber volume.

The energy extraction device preferably comprises a controller for actively controlling the electronically controlled valves in phased relationship to cycles of working chamber volume, to regulate the net rate of displacement of working fluid displaced by each working chamber.

Preferably the hydraulic pump and the hydraulic motor each comprise a rotatable shaft for cyclically driving or being cyclically driven by the working chambers. Preferably the shaft is an eccentric camshaft, and the shaft may comprise a ring cam. The hydraulic pump may function only as a pump and the hydraulic motor may function only as a motor. Alternatively, either the hydraulic pump or hydraulic motor may function as either a motor or a pump in alternative operating modes.

Preferably, each working chamber is operable on each cycle of working chamber volume to carry out an active cycle in which the chamber makes a net displacement of working fluid or an idle cycle in which the chamber makes substantially no net displacement of working fluid. It may be that each working chamber is operable to displace one of a plurality of volumes of working fluid (for example, a range of volumes of working fluid) during an active cycle. The said range of volumes may be discontinuous, for example, the range of volumes of working fluid may comprise a range extending from a first minimum of substantially no net fluid displacement, to a first maximum of at most 25% or 40% of the maximum net fluid displacement of a working chamber, and then from a second minimum of at least 60% or 75% of the maximum net fluid displacement of a working chamber, to a second maximum in the region of 100% of the maximum net fluid displacement of a working chamber. This may occur where, for example, the operating working fluid pressure is sufficiently high that it is not possible to open or close valves in the middle of expansion or contraction strokes of working chamber volume, or the fluid flow is sufficiently high that operating with a continuous range of volumes would be damaging to the working chamber, the valves of the working chamber, or other parts of each fluid working machine.

By "actively control" we refer to enabling the controller to affect the state of a valve, in at least some circumstances, by a control mechanism which consumes power and is not exclusively a passive response, for example, the opening or closing of a valve responsive solely to the pressure difference across a valve. Related terms such as "active control" should be construed accordingly. Nevertheless, the valves are preferably also operable to open or close by passive means. The valve typically opens passively due to the drop in pressure within the working chamber, such as during an intake stroke. For example, the valve may, during at least some cycles, open passively due to a pressure difference and be selectively closable and/or openable under the active control of the controller during a portion of the cycle. Preferably the valves are also biased open or biased closed by a biasing means. Preferably the valves are moveable from a first position to a second position under active control, and movable from the second position to the first position by the biasing means. Preferably one of the first or second positions is a closed position, and the other is an opened position.

By "actively control" (and related terms such as "active control") we include the possibilities that the controller is operable to selectively cause a valve to do one or more of open, close, remain open and/or remain closed. The controller may only be able to affect the state of a valve during a portion of a working cycle. For example, the controller may be unable to open the low pressure valve against a pressure difference during the majority of a working cycle when pressure within the working chamber is substantial. Typically, the controller actively controls the valves by transmitting a control signal either directly to a valve or to a valve driver, such as a semiconductor switch. By transmitting a control signal, we include transmitting a signal which denotes the intended state of a valve (e.g. open or closed) or a pulse which denotes that the state of a valve should be changed (e.g. that the valve should be opened or closed), or a pulse which denotes that the state of a valve should be maintained. The controller may transmit a signal on a continuous basis and stop or change the signal to cause a change in the state of a valve. Valves may comprise a normally closed solenoid opened valve which is held open by provision of an electric current and actively closed by switching off the current.

By "in phased relationship to cycles of working chamber volume" we mean that the timing of active control by the controller of the valves is determined with reference to the phase of the volume cycles of the working chamber. Accordingly, each fluid working machine typically comprises working chamber phase determining means, such as a position sensor. For example, where the cycles of working chamber volume are mechanically linked to the rotation of a shaft, each fluid working machine preferably comprises a shaft position sensor, and optionally a shaft speed sensor, and the controller is operable to receive a shaft position signal from the shaft position sensor, and optionally a shaft speed signal from said shaft speed sensor. In embodiments which comprise a plurality of working chambers, with a phase difference between the volume cycles of different working chambers, the controller will typically be operable to determine the phase of individual working chambers.

Preferably, when the selected net rate of displacement of fluid by the working chambers of the hydraulic pump or the hydraulic motor is sufficiently low, one or more working chambers operable to displace fluid is redundant during one or more cycles of working chamber volume, that is to say, if the working chamber was not present or was not operating, the hydraulic pump or hydraulic motor machine could anyway displace sufficient fluid to meet the demand without changing the overall frequency of active cycles of working chamber volume. Preferably, when the selected net displacement of fluid by the working chambers of the hydraulic pump or the hydraulic motor is sufficiently low, the selected volume of fluid displaced by at least one of the working chambers which are available to provide the selected displacement is substantially zero for at least some cycles of working chamber volume. In some embodiments, when the selected net displacement of fluid by the working chambers of the hydraulic pump or the hydraulic motor is sufficiently low, at least one of the working chambers which are available to provide the selected displacement carries out an idle cycle for at least some cycles of working chamber volume. In some embodiments, wherein the working chambers are operable to displace one of a plurality of volumes of working fluid, when the selected net displacement of fluid by the working chambers of the hydraulic pump or the hydraulic motor is sufficiently low, the selected volume of fluid displaced by at least one of the working chambers which are available to is less than the maximum volume of working fluid which the said at least one of the working chambers is operable to displace.

According to a second aspect of the invention, there is provided an energy extraction device for extracting energy from a fluctuating energy flow from a renewable energy source, the device comprising: a hydraulic pump driven by a rotating shaft (and thereby applying torque to the rotating shaft in use), the rotating shaft driven by the renewable energy source; a hydraulic motor driving a load; a fluid accumulator; a high pressure manifold in fluid communication with an outlet of the hydraulic pump and an inlet of the hydraulic motor, at least one low pressure manifold in fluid communication with an outlet of the hydraulic motor and an inlet of the hydraulic pump; wherein at least one of the hydraulic pump or hydraulic motor is an electronically controlled variable displacement hydraulic machine, comprising a plurality of working chambers of cyclically varying volume and a plurality of valves for regulating the net displacement of working fluid between each working chamber and each manifold, at least one valve associated with each working chamber being an electronically controlled valve, said electronically controlled valves being operated to select the volume of working fluid displaced by each said working chamber on each cycle of working chamber volume and thereby regulate the net rate of displacement of working fluid by the electronically controlled variable displacement hydraulic machine; characterised by the accumulator being selectively in fluid communication with the high pressure manifold through an accumulator regulator, and a fault event sensor operable to detect a fault event, wherein the accumulator regulator is operable to interrupt fluid communication between the fluid accumulator and the high pressure manifold responsive to detection of a fault event.

The invention extends in a third aspect to computer software comprising program code which, when executed on a computer, causes the computer to operate a renewable energy device according to the method of the first aspect. The invention also extends to a computer readable storage medium storing computer software according to the third aspect.

### Brief Description of Drawings

[fig.1]Fig. 1 shows the a wind turbine generator connected to an electricity network and implementing the invention;
[fig.2]Fig. 2 shows a hydraulic motor for use in the wind turbine generator of Fig. 1;
[fig.3]Fig. 3 shows a section of a pump for use in the wind turbine generator of Fig. 1; and
[fig.4]Fig. 4 shows a time series of the invention arresting an overspeed condition of the wind turbine generator of Fig. 1.

### Description of Embodiments

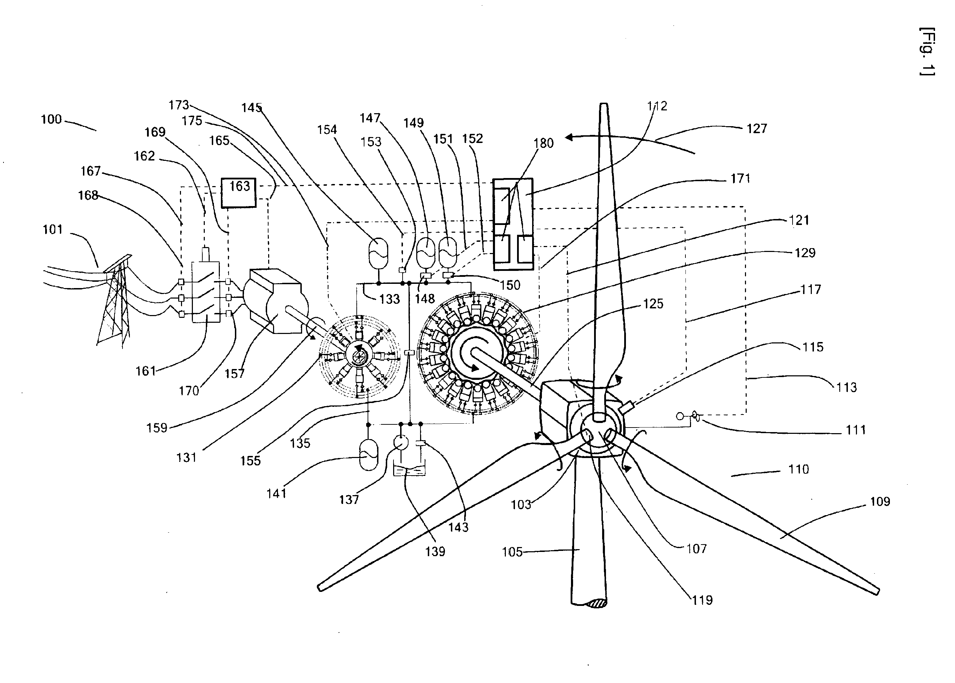

Fig. 1 illustrates a possible embodiment of the invention in the form of a Wind Turbine Generator (WTG, 100), acting as the energy extraction device, and connected to an electricity network (101). Different layouts providing the same functionality are not ruled out. The WTG comprises a nacelle (103) rotatably mounted to a tower (105) and having mounted thereon a hub (107) supporting three blades (109) known collectively as the rotor (110). An anemometer (111) attached externally to the nacelle provides a measured wind speed signal (113) to a controller (112). A rotor speed sensor (115) at the nacelle provides the controller with a rotor speed signal (117, acting in some embodiments as the fault event sensor). In the example system the angle of attack of each of the blades to the wind can be varied by a pitch actuator (119), which exchanges pitch actuation signals and pitch sensing signals (121) with the controller. The invention could be applied to a WTG without a pitch actuator.

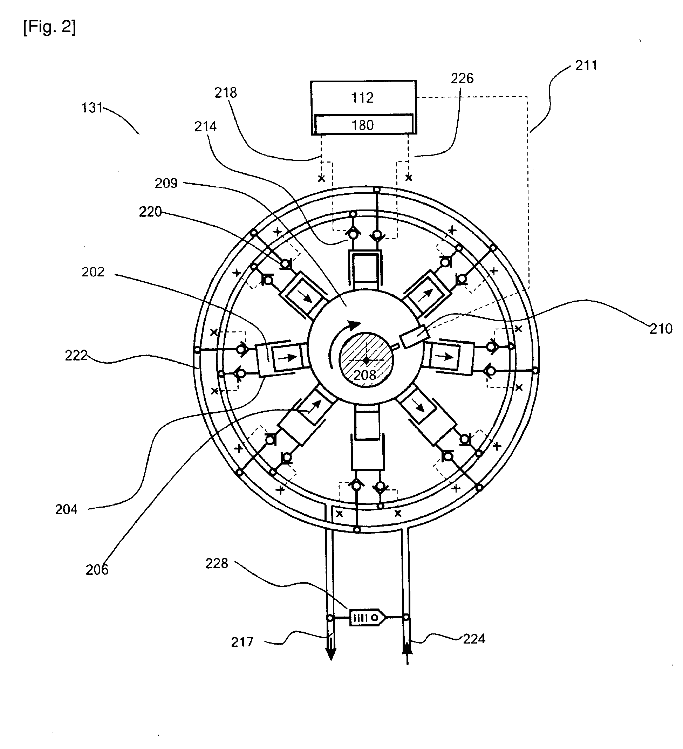

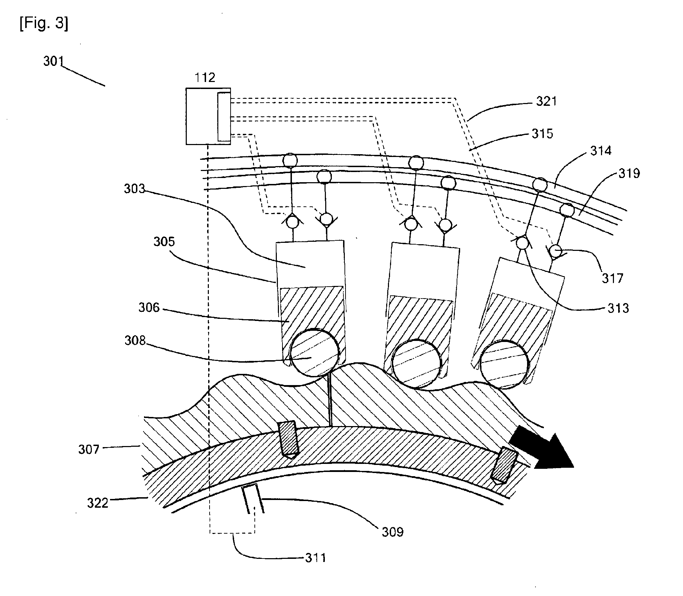

The hub is connected directly to a pump (129), through a rotor shaft (125), acting as the rotatable shaft, which rotates in the direction of rotor rotation (127). The pump is preferably of the type described with reference to Fig. 3, and has a fluid connection to a hydraulic motor (131), preferably of the type described with reference to Fig. 2. The fluid connection between the pump and the hydraulic motor is through a high pressure manifold (133) and a low pressure manifold (135), connected to their high pressure port and low pressure port respectively, and is direct in the sense that there are no intervening valves to restrict the flow. The pump and hydraulic motor are preferably mounted directly one to the other so that the high pressure manifold and low pressure manifold are formed between and within them. A charge pump (137) draws fluid from a reservoir (139) into the low pressure manifold, which is connected to a low pressure accumulator (141). A low pressure relief valve (143) returns fluid from the low pressure manifold to the reservoir. A smoothing accumulator (145) is connected to the high pressure manifold between the pump and the hydraulic motor. A first high pressure accumulator (147) and a second high pressure accumulator (149) are connected to the high pressure manifold through a first isolating valve (148) and a second isolating valve (150) respectively, together acting as the accumulator regulators. The first and second isolating valves include bleed valves in parallel with their main stages, and operable to pass a relatively low flow between the accumulators and the high pressure manifold. The first and second high pressure accumulators may have different precharge pressures, and there may be additional high pressure accumulators with an even wider spread of precharge pressures. The states of the first and second isolating valves are set by the controller through first (151) and second (152) isolating valve signals respectively. Fluid pressure in the high pressure manifold is measured with an HP pressure sensor (153), which provides the controller with an HP pressure signal (154). A high pressure relief valve (155) connects the high pressure and low pressure manifolds.

The hydraulic motor is connected to a generator (157), acting as the load, through a generator shaft (159). The generator is connected to an electricity network through a contactor (161), which receives a contactor control signal (162) from a generator and contactor controller (163). The generator and contactor controller receives measurements of voltage, current and frequency from electricity supply signals (167) and generator output signals (169), measured by electricity supply sensors (168) and generator output sensors (170) respectively, communicates them to the controller (112) and controls the output of the generator by adjusting field voltage generator control signals (165) in accordance with generator and contactor control signals (175) from the controller.

The pump and motor report the instantaneous angular position and speed of rotation of their respective shafts, and the temperature and pressure of the hydraulic oil, to the controller, and the controller sets the state of their respective valves, via pump actuation signals and pump shaft signals (171) and motor actuation signals and motor shaft signals (173). The controller uses power amplifiers (180) to amplify the pitch actuation signals, the isolating valve signals, the pump actuation signals and the motor actuation signals.

Fig. 2 illustrates the hydraulic motor (131) in the form of an electronically commutated hydraulic pump/motor comprising a plurality of working chambers (202, designated individually by letters A to H) which have volumes defined by the interior surfaces of cylinders (204) and pistons (206) which are driven from a rotatable crankshaft (208) by an eccentric cam (209) and which reciprocate within the cylinders to cyclically vary the volume of the working chambers. The rotatable crankshaft is firmly connected to and rotates with the generator shaft (159). A shaft position and speed sensor (210) determines the instantaneous angular position and speed of rotation of the shaft, and through signal line (211, being some of the motor actuation and motor shaft signals 173) informs the controller (112), which enables the controller to determine the instantaneous phase of the cycles of each working chamber. The controller is typically a microprocessor or microcontroller, which executes a stored program in use.

The working chambers are each associated with Low Pressure Valves (LPVs) in the form of electronically actuated face-sealing poppet valves (214), which face inwards toward their associated working chamber and are operable to selectively seal off a channel extending from the working chamber to a low pressure conduit, which functions generally as a net source or sink of fluid in use and may connect one or several working chambers, or indeed all as is shown here, to a reservoir (not shown) through a low pressure port (217) which is fluidically connected to the low pressure manifold (135). The LPVs are normally open solenoid closed valves which open passively when the pressure within the working chamber is less than the pressure within the low pressure manifold, i.e. during an intake stroke, to bring the working chamber into fluid communication with the low pressure manifold, but are selectively closable under the active control of the controller via LPV control lines (218, being some of the motor actuation and motor shaft signals 173) to bring the working chamber out of fluid communication with the low pressure manifold. Alternative electronically controllable valves may be employed, such as normally closed solenoid opened valves.

The working chambers are each further associated with High Pressure Valves (HPVs) (220) in the form of pressure actuated delivery valves. The HPVs open outwards from the working chambers and are operable to seal off a channel extending from the working chamber to a high pressure conduit (222), which functions as a net source or sink of fluid in use and may connect one or several working chambers, or indeed all as is shown here, to a high pressure port (224, acting as the inlet of the hydraulic motor) which is in fluid communication with the high pressure manifold (133). The HPVs function as normally-closed pressure-opening check valves which open passively when the pressure within the working chamber exceeds the pressure within the high pressure manifold. The HPVs also function as normally-closed solenoid opened check valves which the controller may selectively hold open via HPV control lines (226, being some of the motor actuation and motor shaft signals 173) once that HPV is opened by pressure within the associated working chamber. Typically the HPV is not openable by the controller against pressure in the high pressure manifold. The HPV may additionally be openable under the control of the controller when there is pressure in the high pressure manifold but not in the working chamber, or may be partially openable, for example if the valve is of the type and is operated according to the method disclosed in WO/2008/029073 or PCT/ GB2009/051154.

In a normal mode of operation described in the prior art (for example, EP 0 361 927, EP 0 494 236, and EP 1 537 333), the controller selects the net rate of displacement of fluid from the high pressure manifold by the hydraulic motor by actively closing one or more of the LPVs shortly before the point of minimum volume in the associated working chamber's cycle, closing the path to the low pressure manifold and thereby directing a small amount of fluid out through the associated HPV. The controller then actively holds open the associated HPV until near the maximum volume in the associated working chamber's cycle, admitting fluid from the high pressure manifold and applying a torque to the rotatable crankshaft. In an optional pumping mode the controller selects the net rate of displacement of fluid to the high pressure manifold by the hydraulic motor by actively closing one or more of the LPVs near the point of maximum volume in the associated working chamber's cycle, closing the path to the low pressure manifold and thereby directing fluid out through the associated HPV on the subsequent contraction stroke. The controller selects the number and sequence of LPV closures and HPV openings to produce a flow or create a shaft torque or power to satisfy a selected net rate of displacement. As well as determining whether or not to close or hold open the LPVs on a cycle by cycle basis, the controller is operable to vary the precise phasing of the closure of the HPVs with respect to the varying working chamber volume and thereby to select the net rate of displacement of fluid from the high pressure to the low pressure manifold or vice versa.

Arrows on the ports (217,224) indicate fluid flow in the motoring mode; in the pumping mode the flow is reversed. A pressure relief valve (228) may protect the hydraulic motor from damage.

Fig. 3 illustrates in schematic form a portion (301) of the pump (129) with electronically commutated valves. The pump consists of a number of similar working chambers (303) in a radial arrangement, of which only three are shown in the portion in Fig. 3. Each working chamber has a volume defined by the interior surface of a cylinder (305) and a piston (306), which is driven from a ring cam (307) by way of a roller (308), and which reciprocates within the cylinder to cyclically vary the volume of the working chamber. The ring cam may be broken into segments mounted on the shaft (322), which is firmly connected to the rotor shaft (125). There may be more than one bank of radially arranged working chambers, arranged axially along the shaft. Fluid pressure within the low pressure manifold, and thus the working chambers, greater than the pressure surrounding the ring cam, or alternatively a spring (not shown), keeps the roller in contact with the ring cam. A shaft position and speed sensor (309) determines the instantaneous angular position and speed of rotation of the shaft, and informs a controller (112), by way of electrical connection (311, being some of the pump actuation and pump shaft signals 171), which enables the controller to determine the instantaneous phase of the cycles of each individual working chamber. The controller is typically a microprocessor or microcontroller, which executes a stored program in use.

Each working chamber comprises a low pressure valve (LPV) in the form of an electronically actuated face-sealing poppet valve (313) which faces inwards toward the working chamber and is operable to selectively seal off a channel extending from the working chamber to a low pressure conduit (314), which functions generally (in the pumping mode) as a net source of fluid in use (or sink in the case of motoring). The low pressure conduit is fluidically connected to the low pressure manifold (135). The LPV is a normally open solenoid closed valve which opens passively when the pressure within the working chamber is less than the pressure within the low pressure conduit, during an intake stroke, to bring the working chamber into fluid communication with the low pressure manifold, but is selectively closable under the active control of the controller via an electrical LPV control signal (315, being some of the pump actuation and pump shaft signals 171) to bring the working chamber out of fluid communication with the low pressure manifold. Alternative electronically controllable valves may be employed, such as normally closed solenoid opened valves.

The working chamber further comprises a high pressure valve (HPV, 317) in the form of a pressure actuated delivery valve. The HPV faces outwards from the working chamber and is operable to seal off a channel extending from the working chamber to a high pressure conduit (319), which functions as a net source or sink of fluid in use and is in fluid communication with the high pressure manifold (133). The HPV functions as a normally-closed pressuring-opening check valve which opens passively when the pressure within the working chamber exceeds the pressure within the high pressure manifold. The HPV may also function as a normally-closed solenoid opened check valve which the controller may selectively hold open via an HPV control signal (321, being some of the pump actuation and pump shaft signals 171) and once the HPV is opened, by pressure within the working chamber. The HPV may be openable under the control of the controller when there is pressure in the high pressure manifold but not in the working chamber, or may be partially openable.

In a normal mode of operation described in the prior art (for example, EP 0 361 927, EP 0 494 236, and EP 1 537 333), the controller selects the net rate of displacement of fluid to the high pressure manifold by the hydraulic pump by actively closing one or more of the LPVs near the point of maximum volume in the associated working chamber's cycle, closing the path to the low pressure manifold and thereby directing fluid out through the associated HPV on the subsequent contraction stroke. The controller selects the number and sequence of LPV closures to produce a flow or apply a torque to the shaft (322) to satisfy a selected net rate of displacement. As well as determining whether or not to close or hold open the LPVs on a cycle by cycle basis, the controller is operable to vary the precise phasing of the closure of the LPVs with respect to the varying working chamber volume and thereby to select the net rate of displacement of fluid from the low pressure manifold to the high pressure manifold.

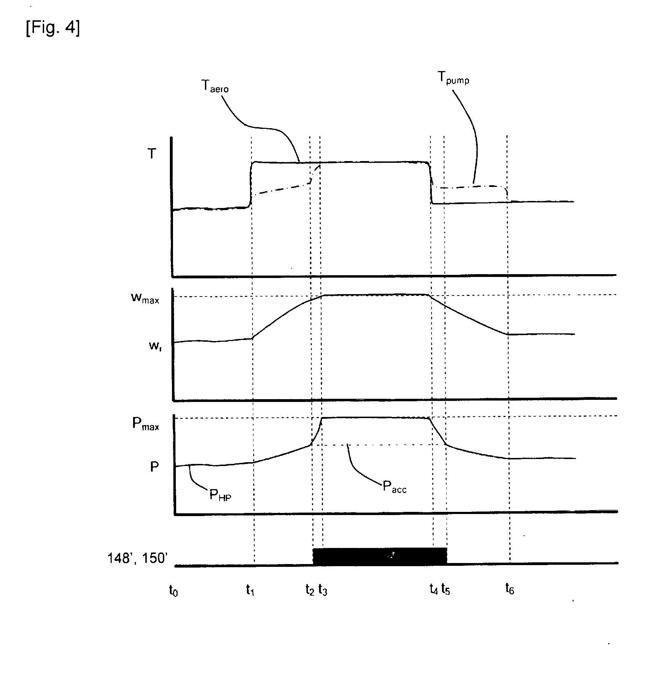

Fig. 4 shows a time series which illustrates the method of the invention, and which maintains the rotor speed within an allowable speed range when a severe wind gust impinges on the WTG. Between to and t₁ the rotor speed wᵣ and high pressure manifold pressure P_{HP} vary a little as the aerodynamic torque Tₐₑᵣₒ of the wind acting on the blades fluctuates with small changes in the wind. The pump torque Tₚᵤₘₚ is controlled by regulating the net rate of displacement of fluid by the pump after considering P_{HP}, and roughly tracks Tₐₑᵣₒ according to a control algorithm selected by the designer. At t₁ a severe wind gust impinges on the WTG, and Tₐₑᵣₒ rises steeply. Tₚᵤₘₚ rises immediately to restrain the rotor, but due to the pressure being too low, it cannot match T ₐₑᵣₒ and the rotor accelerates. Nevertheless, the Tₚᵤₘₚ increase (and the extra rotor speed) cause the pump to produce fluid in excess of that absorbed by the motor, which is stored in the first and second accumulators and thus causes P_{HP} to rise.

At t₂ the controller anticipates that the rotor speed is too rapidly approaching wₘₐₓ, a limit of an acceptable speed range of the rotor, and it closes the first and second isolating valves (148, 150, closure of which is illustrated by a black box in the trace at 148', 150'), interrupting the fluid communication between the high pressure manifold and each accumulator. At the moment of interruption, the controller HP stores the value of the HP pressure signal (154) as the accumulator pressure. Between t₂ and t₃ the high pressure manifold pressure rises sharply due to the excess fluid production, and Tₚᵤₘₚ is able to rise quickly towards Tₐₑᵣₒ. At t₃ the rotor speed is stabilised and controlled when Tₚᵤₘₚ matches Tₐₑᵣₒ.

At t₄ the wind gust is complete, and Tₐₑᵣₒ returns to the original level. Between t₄ and t ₅ Tₚᵤₘₚ reduces somewhat, but is kept higher than Tₐₑᵣₒ until t₅ in order to returns the rotor speed wᵣ to the original level. P_{HP} falls rapidly, and at t₅ the controller detects that the HP pressure signal matches the accumulator pressure that it stored earlier and opens the two isolating valves (148,150). P_{HP} now falls more slowly as fluid drains from the accumulators. Alternatively, the bleed valves within the isolating valves may be operated to speed up the convergence of the accumulator pressure and the high pressure manifold.

The WTG might also close the isolating valves when the controller detects any one of several other fault events: problems with the blades (a stress or vibration outside an acceptable operation range), the hydraulic system (fluid contamination, fluid level in the reservoir or temperature exceeding their respective acceptable operation ranges), or the load (grid failure, a grid fault, voltage or frequency outside their respective acceptable operation ranges).

In some embodiments that the controller sends pitch actuation signals to control the pitch of the blades, before, after or at the same time as interrupting the fluid communication between the high pressure manifold and the accumulators.

Due to the closure of the isolating valves, which do not intervene in the flow of fluid between the pump and motor in normal use, the invention is able to allow the WTG to use a cheap and reliable energy storage device, and also to achieve a quick response to a sudden increase in the torque demand, while maximising generating efficiency in normal operation and maintaining energy generation throughout the increase in torque demand.

## Claims

1. A method of operating an energy extraction device to extract energy from a fluctuating energy flow from a renewable energy source, the device comprising:
a hydraulic pump driven by and applying torque to a rotating shaft, the rotating shaft driven by the renewable energy source;
a hydraulic motor driving a load;
a high pressure manifold in fluid communication with an outlet of the hydraulic pump and an inlet of the hydraulic motor and being selectively placed in fluid communication with a fluid accumulator;
at least one low pressure manifold in fluid communication with an outlet of the hydraulic motor and an inlet of the hydraulic pump;
and a fault event sensor for detecting a fault event;
wherein at least one of the hydraulic pump or hydraulic motor is an electronically controlled variable displacement hydraulic machine, comprising a plurality of working chambers of cyclically varying volume and a plurality of valves for regulating the net displacement of working fluid between each working chamber and each manifold, at least one valve associated with each working chamber being an electronically controlled valve, said electronically controlled valves being operated to select the volume of working fluid displaced by each said working chamber on each cycle of working chamber volume and thereby regulate the net rate of displacement of working fluid by the electronically controlled variable displacement hydraulic machine, the method **characterised by** interrupting fluid communication between the fluid accumulator and the high pressure manifold, and raising the fluid pressure within the high pressure manifold responsive to detection of a fault event.

2. The method of Claim 1 where mitigating the fault event comprises increasing or decreasing the torque to be applied by the hydraulic pump to the rotating shaft.

3. The method of Claim 1 further comprising maintaining fluid communication between the outlet of the hydraulic pump and the inlet of the hydraulic motor on detection of a fault event responsive to which fluid communication between the fluid accumulator and the high pressure manifold has been interrupted.

4. The method of Claim 1, wherein the hydraulic motor is said electronically controlled variable displacement hydraulic machine and the method comprises decreasing the net rate of displacement of working fluid by the hydraulic motor responsive to detection of a fault event.

5. The method of Claim 1 wherein the hydraulic pump is said electronically controlled variable displacement hydraulic machine and the method further comprises increasing the net rate of displacement of working fluid by the hydraulic pump responsive to detection of a fault event.

6. The method of Claim 1 wherein the fault event is one or more of an overspeed condition, a wind gust, an extreme wind gust, a request to stop the rotating shaft, or an undesirable structural condition.

7. The method of any one previous Claim wherein the fault event is detected responsive to a calculation that an acceptable operation range of the energy extraction device has been or will soon be exceeded.

8. The method of Claim 7 wherein the acceptable operation range comprises one or more of an acceptable speed range, an acceptable torque range, an acceptable pressure range, an acceptable voltage range, an acceptable frequency range or an acceptable movement range of the energy extraction device.

9. The method of Claim 1 wherein the fluid accumulator is generally in fluid communication with the hydraulic pump and the hydraulic motor except in response to detection of a fault event.

10. The method of Claim 1 where said fluid accumulator comprises a plurality of fluid accumulator modules the method further comprising interrupting fluid communication between one or more, but not all, of said plurality of smaller fluid accumulator modules and the high pressure manifold responsive to detection of a fault event.

11. The method of Claim 1 where the renewable energy device further comprises at least one additional fluid accumulator which is in permanent fluid communication with the high pressure manifold.

12. The method Claim 1 further comprising determining that fluid communication between the or each fluid accumulator and the high pressure manifold is interrupted, detecting a first pressure in the high pressure manifold and a second pressure in the or each fluid accumulator, selecting the volume of working fluid displaced by each working chamber of at least one of the hydraulic pump and the hydraulic motor to cause the first and second pressures to converge, and placing the or each fluid accumulator and the high pressure manifold in fluid communication with each other when the first pressure and the second pressure meet an equality criterion.

13. The method of Claim 1 wherein the energy extraction device comprises a bleed valve arranged to bring the high pressure manifold pressure and the or each fluid accumulator pressure towards the same value, the method further comprising closing the bleed valve when fluid communication between the high pressure manifold and the fluid accumulator is interrupted, and opening the bleed valve before fluid communication between the high pressure manifold and the fluid accumulator is reinstated.

14. An energy extraction device for extracting energy from a fluctuating energy flow from a renewable energy source, the device comprising:
a hydraulic pump driven by a rotating shaft, the rotating shaft driven by the renewable energy source;
a hydraulic motor driving a load;
a fluid accumulator;
a high pressure manifold in fluid communication with an outlet of the hydraulic pump and an inlet of the hydraulic motor, at least one low pressure manifold in fluid communication with an outlet of the hydraulic motor and an inlet of the hydraulic pump;
wherein at least one of the hydraulic pump or hydraulic motor is an electronically controlled variable displacement hydraulic machine, comprising a plurality of working chambers of cyclically varying volume and a plurality of valves for regulating the net displacement of working fluid between each working chamber and each manifold, at least one valve associated with each working chamber being an electronically controlled valve, said electronically controlled valves being operated to select the volume of working fluid displaced by each said working chamber on each cycle of working chamber volume and thereby regulate the net rate of displacement of working fluid by the electronically controlled variable displacement hydraulic machine;
**characterised by** the accumulator being selectively in fluid communication with the high pressure manifold through an accumulator regulator and raising the fluid pressure within the high pressure manifold, and a fault event sensor operable to detect a fault event, wherein the accumulator regulator is operable to interrupt fluid communication between the fluid accumulator and the high pressure manifold responsive to detection of a fault event.

15. Computer software comprising program code which, when executed on a computer, causes the computer to operate a renewable energy device according to the method of Claim 1.

16. A energy extraction device operated according to the method of Claim 1, or comprising a computer executing computer software code according to Claim 15.

## Patentansprüche

1. Verfahren zum Betreiben einer Energiegewinnungsvorrichtung zum Gewinnen von Energie aus einem fluktuierenden Energiestrom aus einer erneuerbaren Energiequelle, wobei die Vorrichtung enthält:
eine hydraulische Pumpe, die von einer Drehwelle angetrieben wird und auf diese ein Moment ausübt, wobei die Drehwelle von der erneuerbaren Energiequelle angetrieben wird;
einen hydraulischen Motor, der eine Last antreibt;
einen Hochdruckverteiler in Fluidverbindung mit einem Auslass der hydraulischen Pumpe und einem Einlass des hydraulischen Motors und der selektiv in Fluidverbindung mit einem Fluidakkumulator steht;
mindestens einen Niederdruckverteiler in Fluidverbindung mit einem Auslass des hydraulischen Motors und einem Einlass der hydraulischen Pumpe;
und einen Fehlerfallsensor zum Erfassen eines Fehlerfalls;
wobei mindestens eines von der hydraulischen Pumpe und dem hydraulischen Motor eine elektronisch gesteuerte hydraulische Maschine mit variabler Verdrängung ist, die mehrere Arbeitskammern mit zyklisch variierendem Volumen und mehrere Ventile zum Regulieren der Nettoverdrängung von Arbeitsfluid zwischen jeder Arbeitskammer und jedem Verteiler enthält, wobei mindestens ein Ventil, das jeder Arbeitskammer zugeordnet ist, ein elektronisch gesteuertes Ventil ist, wobei die elektronisch gesteuerten Ventile zum Auswählen des Volumens von Arbeitsfluid betrieben werden, das von jeder Arbeitskammer bei jedem Zyklus an Arbeitskammervolumen verdrängt wird, und dadurch die Nettoverdrängungsrate von Arbeitsfluid durch die elektronisch gesteuerte hydraulische Maschine mit variabler Verdrängung regulieren, wobei das Verfahren durch eine Unterbrechung der Fluidverbindung zwischen dem Fluidakkumulator und dem Hochdruckverteiler und eine Erhöhung des Fluiddrucks in dem Hochdruckverteiler als Reaktion auf das Erfassen eines Fehlerfalls gekennzeichnet ist.

2. Verfahren nach Anspruch 1, wobei das Mildern des Fehlerfalls das Erhöhen oder Senken des Moments enthält, das von der hydraulischen Pumpe auf die Drehwelle ausgeübt wird.

3. Verfahren nach Anspruch 1, des Weiteren enthaltend das Aufrechterhalten der Fluidverbindung zwischen dem Auslass der hydraulischen Pumpe und dem Einlass des hydraulischen Motors bei Erfassen eines Fehlerfalls, infolgedessen die Fluidverbindung zwischen dem Fluidakkumulator und dem Hochdruckverteiler unterbrochen wurde.

4. Verfahren nach Anspruch 1, wobei der hydraulische Motor die elektronisch gesteuerte hydraulische Maschine mit variabler Verdrängung ist und das Verfahren das Senken der Nettoverdrängungsrate von Arbeitsfluid durch den hydraulischen Motor als Reaktion auf das Erfassen eines Fehlerfalls enthält.

5. Verfahren nach Anspruch 1, wobei die hydraulische Pumpe die elektronisch gesteuerte hydraulische Maschine mit variabler Verdrängung ist und das Verfahren des Weiteren das Erhöhen der Nettoverdrängungsrate von Arbeitsfluid durch die hydraulische Pumpe als Reaktion auf das Erfassen eines Fehlerfalls enthält.

6. Verfahren nach Anspruch 1, wobei der Fehlerfall eines oder mehrere von einer Überdrehzahlbedingung, einer Windböe, einer extremen Windböe, einer Anfrage zum Stoppen der Drehwelle oder einer unerwünschten strukturellen Bedingung ist.

7. Verfahren nach einem vorangehenden Anspruch, wobei der Fehlerfall als Reaktion auf eine Berechnung erfasst wird, dass ein annehmbarer Betriebsbereich der Energiegewinnungsvorrichtung überschritten wurde oder bald überschritten werden wird.

8. Verfahren nach Anspruch 7, wobei der annehmbare Betriebsbereich eines oder mehrere von einem annehmbaren Drehzahlbereich, einem annehmbaren Momentbereich, einem annehmbaren Druckbereich, einem annehmbaren Spannungsbereich, einem annehmbaren Frequenzbereich oder einem annehmbaren Bewegungsbereich der Energiegewinnungsvorrichtung enthält.

9. Verfahren nach Anspruch 1, wobei der Fluidakkumulator im Allgemeinen in Fluidverbindung mit der hydraulischen Pumpe und dem hydraulischen Motor steht, außer als Reaktion auf das Erfassen eines Fehlerfalls.

10. Verfahren nach Anspruch 1, wobei der Fluidakkumulator mehrere Fluidakkumulatormodule enthält, wobei das Verfahren des Weiteren das Unterbrechen der Fluidverbindung zwischen einem oder mehreren, aber nicht allen, der mehreren kleineren Fluidakkumulatormodule und dem Hochdruckverteiler als Reaktion auf das Erfassen eines Fehlerfalls enthält.

11. Verfahren nach Anspruch 1, wobei die erneuerbare Energievorrichtung des Weiteren mindestens einen zusätzlichen Fluidakkumulator enthält, der in permanenter Fluidverbindung mit dem Hochdruckverteiler steht.

12. Verfahren nach Anspruch 1, des Weiteren enthaltend das Bestimmen, dass die Fluidverbindung zwischen dem oder jedem Fluidakkumulator und dem Hochdruckverteiler unterbrochen ist, das Erfassen eines ersten Drucks im Hochdruckverteiler und eines zweiten Drucks in dem oder jedem Fluidakkumulator, das Auswählen des Volumens von Arbeitsfluid, das von jeder Arbeitskammer von mindestens einer der hydraulischen Pumpe und dem hydraulischen Motor verdrängt wird, um den ersten und zweiten Druck konvergieren zu lassen, und das Anordnen des oder jedes Fluidakkumulators und des Hochdruckverteilers in Fluidverbindung miteinander, wenn der erste Druck und der zweite Druck ein Gleichheitskriterium erfüllen.

13. Verfahren nach Anspruch 1, wobei die Energiegewinnungsvorrichtung ein Anzapfventil enthält, das so angeordnet ist, dass es den Druck des Hochdruckverteilers und den Druck des oder jedes Fluidakkumulators auf denselben Wert bringt, wobei das Verfahren des Weiteren das Schließen des Anzapfventils enthält, wenn die Fluidverbindung zwischen dem Hochdruckverteiler und dem Fluidakkumulator unterbrochen ist, und das Öffnen des Anzapfventils, bevor die Fluidverbindung zwischen dem Hochdruckverteiler und dem Fluidakkumulator wieder hergestellt wird.

14. Energiegewinnungsvorrichtung zum Gewinnen von Energie aus einem fluktuierenden Energiestrom aus einer erneuerbaren Energiequelle, wobei die Vorrichtung enthält:
eine hydraulische Pumpe, die von einer Drehwelle angetrieben wird, wobei die Drehwelle von der erneuerbaren Energiequelle angetrieben wird;
einen hydraulischen Motor, der eine Last antreibt;
einen Fluidakkumulator;
einen Hochdruckverteiler in Fluidverbindung mit einem Auslass der hydraulischen Pumpe und einem Einlass des hydraulischen Motors, mindestens einen Niederdruckverteiler in Fluidverbindung mit einem Auslass des hydraulischen Motors und einem Einlass der hydraulischen Pumpe;
wobei mindestens eines von der hydraulischen Pumpe und dem hydraulischen Motor eine elektronisch gesteuerte hydraulische Maschine mit variabler Verdrängung ist, die mehrere Arbeitskammern mit zyklisch variierendem Volumen und mehrere Ventile zum Regulieren der Nettoverdrängung von Arbeitsfluid zwischen jeder Arbeitskammer und jedem Verteiler enthält, wobei mindestens ein Ventil, das jeder Arbeitskammer zugeordnet ist, ein elektronisch gesteuertes Ventil ist, wobei die elektronisch gesteuerten Ventile zum Auswählen des Volumens von Arbeitsfluid betrieben werden, das von jeder Arbeitskammer bei jedem Zyklus an Arbeitskammervolumen verdrängt wird, und dadurch die Nettoverdrängungsrate von Arbeitsfluid durch die elektronisch gesteuerte hydraulische Maschine mit variabler Verdrängung regulieren;
**gekennzeichnet durch** den Akkumulator, der selektiv mit dem Hochdruckverteiler **durch** einen Akkumulatorregulator in Fluidverbindung steht und den Fluiddruck in dem Hochdruckverteiler erhöht, und einen Fehlerfallsensor, der zum Erfassen eines Fehlerfalls betreibbar ist, wobei der Akkumulatorregulator zum Unterbrechen der Fluidverbindung zwischen dem Fluidakkumulator und dem Hochdruckverteiler als Reaktion auf das Erfassen eines Fehlerfalls betreibbar ist.

15. Computersoftware, enthaltend einen Programmcode, der, wenn er auf einem Computer ausgeführt wird, den Computer veranlasst, eine erneuerbare Energievorrichtung nach dem Verfahren von Anspruch 1 zu betreiben.

16. Energiegewinnungsvorrichtung, die nach dem Verfahren von Anspruch 1 betrieben wird oder einen Computer enthält, der den Computer-Softwarecode nach Anspruch 15 ausführt.

## Revendications

1. Procédé d'exploitation d'un dispositif d'extraction d'énergie servant à extraire de l'énergie d'un flux d'énergie fluctuant en provenance d'une source d'énergie renouvelable, le dispositif comportant :
une pompe hydraulique entraînée par et appliquant un couple à un arbre tournant, l'arbre tournant étant entraîné par la source d'énergie renouvelable ;
un moteur hydraulique entraînant une charge ;
un collecteur à haute pression en communication fluidique avec une sortie de la pompe hydraulique et une entrée du moteur hydraulique et étant sélectivement placé en communication fluidique avec un accumulateur de fluide ;
au moins un collecteur à basse pression en communication fluidique avec une sortie du moteur hydraulique et une entrée de la pompe hydraulique ;
et un capteur d'évènement de défaillance servant à détecter un évènement de défaillance ;
la pompe hydraulique et / ou le moteur hydraulique étant une machine hydraulique à cylindrée variable à régulation électronique, comportant une pluralité de chambres de travail d'un volume variant cycliquement et une pluralité de vannes servant à réguler la cylindrée nette de fluide de travail entre chaque chambre de travail et chaque collecteur, au moins une vanne associée à chaque chambre de travail étant une vanne à commande électronique, lesdites vannes à commande électronique étant actionnées pour sélectionner le volume de fluide de travail déplacé par chacune desdites chambres de travail sur chaque cycle de volume des chambres de travail et réguler ainsi le débit net de déplacement de fluide de travail par la machine hydraulique à cylindrée variable à régulation électronique, le procédé étant **caractérisé par** les étapes consistant à interrompre la communication fluidique entre l'accumulateur de fluide et le collecteur à haute pression, et à accroître la pression de fluide à l'intérieur du collecteur à haute pression en réaction à la détection d'un évènement de défaillance.

2. Procédé selon la revendication 1, l'atténuation de l'évènement de défaillance comportant l'étape consistant à augmenter ou à diminuer le couple à appliquer par la pompe hydraulique à l'arbre tournant.

3. Procédé selon la revendication 1, comportant en outre l'étape consistant à maintenir une communication fluidique entre la sortie de la pompe hydraulique et l'entrée du moteur hydraulique en cas de détection d'un évènement de défaillance en réaction auquel la communication fluidique entre l'accumulateur de fluide et le collecteur à haute pression a été interrompue.

4. Procédé selon la revendication 1, le moteur hydraulique étant ladite machine hydraulique à cylindrée variable à régulation électronique et le procédé comportant l'étape consistant à diminuer le débit net de déplacement de fluide de travail par le moteur hydraulique en réaction à la détection d'un évènement de défaillance.

5. Procédé selon la revendication 1, la pompe hydraulique étant ladite machine hydraulique à cylindrée variable à régulation électronique et le procédé comportant en outre l'étape consistant à augmenter le débit net de déplacement de fluide de travail par la pompe hydraulique en réaction à la détection d'un évènement de défaillance.

6. Procédé selon la revendication 1, l'évènement de défaillance étant un état de survitesse, une rafale de vent, une rafale de vent extrême, une demande d'arrêt de l'arbre tournant et / ou un état structural indésirable.

7. Procédé selon l'une quelconque des revendications précédentes, l'évènement de défaillance étant détecté en réaction à un calcul selon lequel une plage de fonctionnement admissible du dispositif d'extraction d'énergie a été ou sera bientôt dépassée.

8. Procédé selon la revendication 7, la plage de fonctionnement admissible comportant une plage de vitesse admissible, une plage de couple admissible, une plage de pression admissible, une plage de tension admissible, une plage de fréquence admissible et / ou une plage de mouvement admissible du dispositif d'extraction d'énergie.

9. Procédé selon la revendication 1, l'accumulateur de fluide étant généralement en communication fluidique avec la pompe hydraulique et le moteur hydraulique, sauf en réaction à la détection d'un évènement de défaillance.

10. Procédé selon la revendication 1, ledit accumulateur de fluide comportant une pluralité de modules d'accumulateur de fluide, le procédé comportant en outre l'étape consistant à interrompre la communication fluidique entre un ou plusieurs modules, mais pas la totalité, de ladite pluralité de plus petits modules d'accumulateur de fluide et le collecteur à haute pression en réaction à la détection d'un évènement de défaillance.

11. Procédé selon la revendication 1, le dispositif à énergie renouvelable comportant en outre au moins un accumulateur de fluide supplémentaire qui est en communication fluidique permanente avec le collecteur à haute pression.

12. Procédé selon la revendication 1 comportant en outre les étapes consistant à déterminer que la communication fluidique entre l'accumulateur ou chaque accumulateur de fluide et le collecteur à haute pression est interrompue, à détecter une première pression dans le collecteur à haute pression et une deuxième pression dans l'accumulateur ou chaque accumulateur de fluide, à sélectionner le volume de fluide de travail déplacé par chaque chambre de travail de la pompe hydraulique et / ou du moteur hydraulique pour faire converger les première et deuxième pression, et à placer l'accumulateur ou chaque accumulateur de fluide et le collecteur à haute pression en communication fluidique l'un avec l'autre lorsque la première pression et la deuxième pression satisfont un critère d'égalité.

13. Procédé selon la revendication 1. le dispositif d'extraction d'énergie comportant une vanne de prélèvement disposée de façon à amener la pression du collecteur à haute pression et la pression de l'accumulateur ou de chaque accumulateur de fluide vers la même valeur, le procédé comportant en outre les étapes consistant à fermer la vanne de prélèvement lorsque la communication fluidique entre le collecteur à haute pression et l'accumulateur de fluide est interrompue, et à ouvrir la vanne de prélèvement avant que la communication fluidique entre le collecteur à haute pression et l'accumulateur de fluide soit rétablie.

14. Dispositif d'extraction d'énergie servant à extraire de l'énergie d'un flux d'énergie fluctuant en provenance d'une source d'énergie renouvelable, le dispositif comportant :
une pompe hydraulique entraînée par un arbre tournant, l'arbre tournant étant entraîné par la source d'énergie renouvelable ;
un moteur hydraulique entraînant une charge ;
un accumulateur de fluide ;
un collecteur à haute pression en communication fluidique avec une sortie de la pompe hydraulique et une entrée du moteur hydraulique, au moins un collecteur à basse pression en communication fluidique avec une sortie du moteur hydraulique et une entrée de la pompe hydraulique ;
la pompe hydraulique et / ou le moteur hydraulique étant un machine hydraulique à cylindrée variable à régulation électronique, comportant une pluralité de chambres de travail d'un volume variant cycliquement et une pluralité de vannes servant à réguler la cylindrée nette de fluide de travail entre chaque chambre de travail et chaque collecteur, au moins une vanne associée à chaque chambre de travail étant une vanne à commande électronique, lesdites vannes à commande électronique étant actionnées pour sélectionner le volume de fluide de travail déplacé par chacune desdites chambres de travail sur chaque cycle de volume des chambres de travail et réguler ainsi le débit net de déplacement de fluide de travail by la machine hydraulique à cylindrée variable à régulation électronique ;
**caractérisé en ce que** l'accumulateur est sélectivement en communication fluidique avec le collecteur à haute pression à travers un régulateur d'accumulateur et **en ce qu'**il élève la pression de fluide à l'intérieur du collecteur à haute pression, et un capteur d'évènement de défaillance exploitable pour détecter un évènement de défaillance, le régulateur d'accumulateur étant exploitable pour interrompre la communication fluidique entre l'accumulateur de fluide et le collecteur à haute pression en réaction à la détection d'un évènement de défaillance.

15. Logiciel informatique comportant un code de programme qui, lorsqu'il est exécuté sur un ordinateur, fait en sorte que l'ordinateur exploite un dispositif à énergie renouvelable selon le procédé de la revendication 1.

16. Dispositif d'extraction d'énergie exploité selon le procédé de la revendication 1, ou comportant un ordinateur exécutant un code de logiciel informatique selon la revendication 15.
